# EUROPEAN PATENT APPLICATION

(11) **EP 4 133 958 A1**
(43) Date of publication of application: **15.02.2023**
(21) Application number: 22773379.7
(22) Date of filing: 08.06.2022
(51) Int. Cl.: A24F 40/50, A24F 40/46, A24F 47/00, H05B 1/02

(54) **AEROSOL-GENERATING DEVICE AND CONTROL METHOD THEREFOR**

(30) Priority: 14.06.2021 KR 20210076997
(71) Applicant: KT&G Corporation, Daedeok-gu Daejeon 34337 (KR)
(72) Inventor: JUNG, Jin Chul, Daejeon 34128 (KR); SEO, Jang Won, Daejeon 34128 (KR); JEONG, Min Seok, Daejeon 34128 (KR); GO, Gyoung Min, Daejeon 34128 (KR); BAE, Hyung Jin, Daejeon 34128 (KR); JANG, Chul Ho, Daejeon 34128 (KR); JEONG, Jong Seong, Daejeon 34128 (KR)
(74) Representative: Ter Meer Steinmeister & Partner
(86) International application number: PCT/KR2022/008089
(87) International publication number: WO 2022/265290

(57) **Abstract**

An aerosol generating device according to an embodiment includes a heater configured to heat an aerosol generating article accommodated in an accommodation space of the aerosol generating device, a battery configured to supply power to the heater, a temperature sensor configured to measure a temperature of the aerosol generating article, and a processor configured to control power supplied to the heater from the battery according to a preset temperature profile including a preheating period and a heating period, wherein the processor is further configured to detect whether an amount of moisture in the aerosol generating article is in a preset range based on the temperature of the aerosol generating article in the preheating period, and control a duration of the preheating period according to whether the amount of moisture in the aerosol generating article is included in the preset range.

## Description

### TECHNICAL FIELD

The present disclosure relates to an aerosol generating device and a control method for the same.

### BACKGROUND ART

There is an increasing demand for an aerosol generating device that generates an aerosol in a non-combustible manner as an alternative to a traditional cigarette. An aerosol generating device is, for example, a device that generates and supplies aerosols to a user in a non-combustible manner from an aerosol generating material, or generates aerosols having flavors by passing a vapor generated from an aerosol generating material through a fragrance medium.

When an aerosol generating article is inserted into an accommodation space, the aerosol generating device may heat the aerosol generating article according to a preset temperature profile. A temperature profile may refer to the change in temperature of a heater or an aerosol generating article according to the time or the number of puffs during a smoking operation using the aerosol generating article.

In addition, the aerosol that is generated when the aerosol generating device heats the aerosol generating article may differ according to the component of the aerosol generating article included in the aerosol generating device. For example, the temperature and amount of atomization of the aerosol may differ depending on the amount of moisture in an aerosol generating material.

### DESCRIPTION OF EMBODIMENTS

### TECHNICAL PROBLEM

An aerosol generating material included in an aerosol generating article may include a certain amount of moisture. When the amount of moisture included in the aerosol generating article is greater than a preset range, an excessive amount of vapor may be generated when heating the aerosol generating article with the aerosol generating device, thereby generating high-temperature aerosols. In addition, when the amount of moisture in the aerosol generating article is less than a preset range, it may be difficult to generate a sufficient amount of aerosols during preheating.

Therefore, an aerosol generating device for detecting whether the amount of moisture in the aerosol generating article is in a preset range is required. In addition, when the amount of moisture is greater or less than the preset range, an aerosol generating device that may adjust the amount of moisture in the aerosol generating article is required.

Various embodiments provide an aerosol generating device capable of determining whether the amount of moisture in the aerosol generating article is in a preset range, and when the amount of moisture exceeds the preset range, adjusting the amount of moisture by changing a temperature profile.

Objects to be achieved by the embodiments are not limited to the above-described objects, and objects not described may be clearly understood by those skilled in the art to which the embodiments belong from the present specification and the accompanying drawings.

### SOLUTION TO PROBLEM

According to one or more embodiments, an aerosol generating device includes a heater configured to heat an aerosol generating article accommodated in an accommodation space of the aerosol generating device, a battery configured to supply power to the heater, a temperature sensor configured to measure a temperature of the aerosol generating article, and a processor configured to control power supplied to the heater from the battery according to a preset temperature profile including a preheating period and a heating period, wherein the processor is further configured to detect whether an amount of moisture in the aerosol generating article is included in a preset range based on the temperature of the aerosol generating article in the preheating period, and control a duration of the preheating period according to whether the amount of moisture in the aerosol generating article is included in the preset range.

According to one or more embodiments, a method of controlling an aerosol generating device includes detecting whether an amount of moisture in the aerosol generating article is included in a preset range based on a temperature of the aerosol generating article in a preheating period, adjusting a duration of the preheating period according to whether the amount of moisture in the aerosol generating article is included in the preset range, and, when the preheating period ends according to the adjusted duration, controlling power supplied to a heater to enter a heating period.

### ADVANTAGEOUS EFFECTS OF DISCLOSURE

An aerosol generating device according to the disclosure may measure the temperature of an aerosol generating article by using a temperature sensor, and detect whether the amount of moisture in the aerosol generating article is included in a preset range based on the temperature of the aerosol generating article. In addition, when the amount of moisture in the aerosol generating article is not included in the preset range, a temperature profile may be changed so that the amount of moisture in the aerosol generating article is adjusted. Therefore, the aerosol generating device according to the disclosure may produce aerosol at a suitable temperature for the user to inhale, and may realize a sufficient amount of atomization.

However, effects of the embodiments are not limited to the above effects, and effects that are not mentioned could be clearly understood by one of ordinary skill in the art from the present specification and the attached drawings.

### BRIEF DESCRIPTION OF DRAWINGS

FIGS. 1 through 3 are diagrams showing examples in which a cigarette is inserted into an aerosol generating device.
FIG. 4 is a diagram illustrating an example of a cigarette.
FIG. 5 is a diagram illustrating hardware configurations of the aerosol generating device according to an embodiment.
FIG. 6 is a graph illustrating the temperature of the aerosol generating article according to the amount of moisture in the aerosol generating article.
FIGS. 7A and 7B are graphs illustrating temperature profiles of an aerosol generating device according to an embodiment.
FIG. 8 is a flowchart illustrating a method, performed by the aerosol generating device shown in FIG. 5, of detecting the amount of moisture in the aerosol generating article and adjusting the amount of moisture.
FIG. 9 is a graph showing a change in temperature of the aerosol generating article when the aerosol generating article is heated.
FIG. 10 is a flowchart of a method of controlling the aerosol generating device shown in FIG. 5.

### MODE OF DISCLOSURE

With respect to the terms used to describe the various embodiments, general terms which are currently and widely used are selected in consideration of functions of structural elements in the various embodiments of the present disclosure. However, meanings of the terms can be changed according to intention, a judicial precedence, the appearance of new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used in the present disclosure, expressions such as "at least one" define the entire list of elements, when preceding the list of elements, not individual elements of the list. For example, the expression "at least one of a, b, and c" may be understood to include "a", "b", "c", "a and b", "a and c", "b and c", or "a, b, and c".

In addition, terms including ordinal numbers such as "first" or "second" used in the present disclosure may be used to describe various components, but the components are not limited by the terms. The terms may be used to distinguish one component from another component.

Hereinafter, the present disclosure will now be described more fully with reference to the accompanying drawings, in which exemplary embodiments of the present disclosure are shown such that one of ordinary skill in the art may easily work the present disclosure. The disclosure may, however, be embodied in many different forms and should not be construed as being limited to the embodiments set forth herein.

Hereinafter, embodiments of the present disclosure will be described in detail with reference to the drawings.

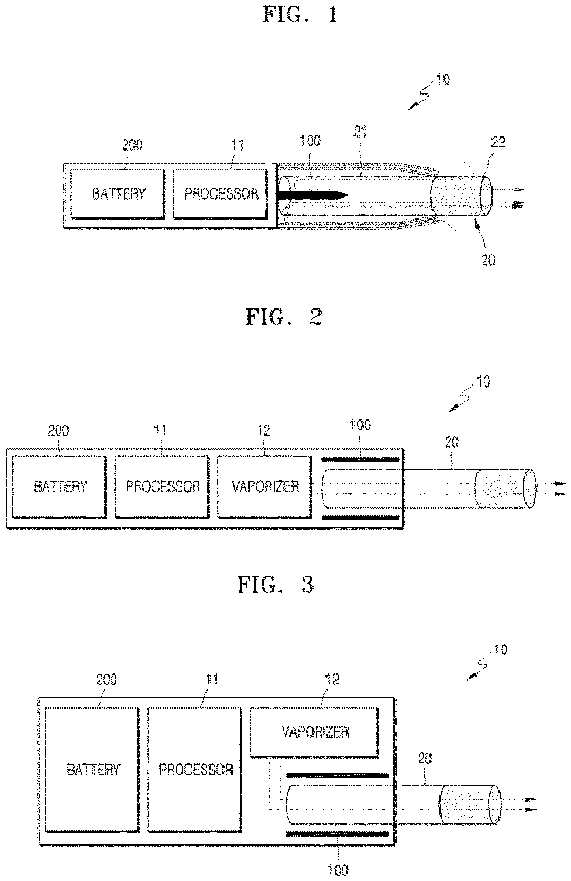

FIGS. 1 through 3 are diagrams showing examples in which a cigarette is inserted into an aerosol generating device.

Referring to FIG. 1, the aerosol generating device 10 may include a battery 200, a controller 400, and a heater 100a. Referring to FIGS. 2 and 3, the aerosol generating device 10 may further include a vaporizer 12. Also, a cigarette 20 may be inserted into an inner space of the aerosol generating device 10.

FIGS. 1 through 3 illustrate components of the aerosol generating device 10, which are related to the present embodiment. Therefore, it will be understood by one of ordinary skill in the art related to the present embodiment that other general-purpose components may be further included in the aerosol generating device 10, in addition to the components illustrated in FIGS. 1 through 3.

Also, FIGS. 2 and 3 illustrate that the aerosol generating device 10 includes the heater 100b. However, as necessary, the heater 100b may be omitted.

FIG. 1 illustrates that the battery 200, the controller 400, and the heater 100a are arranged in series. Also, FIG. 2 illustrates that the battery 200, the controller 400, the vaporizer 12, and the heater 100b are arranged in series. Also, FIG. 3 illustrates that the vaporizer 12 and the heater 100b are arranged in parallel. However, the internal structure of the aerosol generating device 10 is not limited to the structures illustrated in FIGS. 1 through 3. In other words, according to the design of the aerosol generating device 10, the battery 200, the controller 400, the heater 100a, 100b, and the vaporizer 12 may be differently arranged.

When the cigarette 20 is inserted into the aerosol generating device 10, the aerosol generating device 10 may operate the heater 13 and/or the vaporizer 12 to generate aerosol from the cigarette 20 and/or the vaporizer 12. The aerosol generated by the heater 13 and/or the vaporizer 12 is delivered to a user by passing through the cigarette 20.

As necessary, even when the cigarette 20 is not inserted into the aerosol generating device 10, the aerosol generating device 10 may heat the heater 13.

The battery 200 may supply power to be used for the aerosol generating device 10 to operate. For example, the battery 200 may supply power to heat the heater 100a, 100b or the vaporizer 12, and may supply power for operating the controller 400. Also, the battery 200 may supply power for operations of a display, a sensor, a motor, etc. mounted in the aerosol generating device 10.

The controller 400 may generally control operations of the aerosol generating device 10. In detail, the controller 400 may control not only operations of the battery 200, the heater 13, and the vaporizer 12, but also operations of other components included in the aerosol generating device 10. Also, the controller 400 may check a state of each of the components of the aerosol generating device 10 to determine whether or not the aerosol generating device 10 is able to operate.

The controller 400 may include at least one processor. A processor can be implemented as an array of a plurality of logic gates or can be implemented as a combination of a general-purpose microprocessor and a memory in which a program executable in the microprocessor is stored. In addition, it may be understood by one of ordinary skill in the art that the processor 120 may be implemented as other types of hardware.

The heater 100a, 100b may be heated by the power supplied from the battery 200. For example, when the cigarette 20 is inserted into the aerosol generating device 10, the heater 100 may be located outside the cigarette 20. Thus, the heated heater 100a, 100b may increase a temperature of an aerosol generating material in the cigarette.

The heater 100a, 100b may include an electro-resistive heater. For example, the heater 100a, 100b may include an electrically conductive track, and the heater 100 may be heated when currents flow through the electrically conductive track. However, the heater 100a, 100b is not limited to the example described above and may include all heaters which may be heated to a desired temperature. Here, the desired temperature may be pre-set in the aerosol generating device 10 or may be set by a user.

As another example, the heater 100a, 100b may include an induction heater. In detail, the heater 100a, 100b may include an electrically conductive coil for heating a cigarette in an induction heating method, and the cigarette may include a susceptor which may be heated by the induction heater.

For example, the heater 100a, 100b may include a tube-type heating element, a plate-type heating element, a needle-type heating element, or a rod-type heating element, and may heat the inside or the outside of the cigarette 20, according to the shape of the heating element.

Also, the aerosol generating device 10 may include a plurality of heaters 100a, 100b. Here, the plurality of heaters 100a, 100b may be inserted into the cigarette 20 or may be arranged outside the cigarette 20. Also, some of the plurality of heaters 100a, 100b may be inserted into the cigarette 20 and the others may be arranged outside the cigarette 20. In addition, the shape of the heater 13 is not limited to the shapes illustrated in FIGS. 1 through 3 and may include various shapes.

The vaporizer 12 may generate aerosol by heating a liquid composition and the generated aerosol may pass through the cigarette 20 to be delivered to a user. In other words, the aerosol generated via the vaporizer 12 may move along an air flow passage of the aerosol generating device 10 and the air flow passage may be configured such that the aerosol generated via the vaporizer 12 passes through the cigarette to be delivered to the user.

For example, the vaporizer 12 may include a liquid storage, a liquid delivery element, and a heating element, but it is not limited thereto. For example, the liquid storage, the liquid delivery element, and the heating element may be included in the aerosol generating device 10 as independent modules.

The liquid storage may store a liquid composition. For example, the liquid composition may be a liquid including a tobacco-containing material including a volatile tobacco flavor component, or may be a liquid including a non-tobacco material. The liquid storage may be formed to be detachable from the vaporizer 12 or may be formed integrally with the vaporizer 12.

For example, the liquid composition may include water, a solvent, ethanol, a plant extract, a flavoring, a flavoring agent, or a vitamin mixture. The flavoring may include, but is not limited to, menthol, peppermint, spearmint oil, various fruit flavoring ingredients, or the like. The flavoring agent may include ingredients capable of providing a user with a variety of flavors or savors. Vitamin mixtures may be a mixture of at least one of vitamin A, vitamin B, vitamin C, and vitamin E, but are not limited thereto. The liquid composition may also include an aerosol former such as glycerin and propylene glycol.

The liquid delivery element may deliver the liquid composition of the liquid storage to the heating element. For example, the liquid delivery unit may be, but is not limited to, a wick including cotton fiber, ceramic fiber, glass fiber, or porous ceramic.

The heating element is an element for heating the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, an aerosol may be generated.

For example, the vaporizer 12 may be referred to as a cartomizer or an atomizer, but it is not limited thereto.

The aerosol generating device 10 may further include general-purpose components in addition to the battery 200, the controller 400, the heater 100a, 100b and the vaporizer 12. For example, the aerosol generating device 10 may include a display capable of outputting visual information and/or a motor for outputting haptic information. Also, the aerosol generating device 10 may include at least one sensor (a puff sensor, a temperature sensor, an aerosol generating article insertion detecting sensor, etc.). Also, the aerosol generating device 10 may be formed as a structure that, even when the cigarette 20 is inserted into the aerosol generating device 10, may introduce external air or discharge internal air.

Although not illustrated in FIGS. 1 through 3, the aerosol generating device 10 and an additional cradle may form together a system. For example, the cradle may be used to charge the battery 200 of the aerosol generating device 10. Alternatively, the heater 100a, 100b may be heated when the cradle and the aerosol generating device 10 are coupled to each other.

A cigarette 20 may be similar to a general combustive cigarette. For example, the cigarette 20 may be divided into a first portion including an aerosol generating material and a second portion including a filter, etc. Alternatively, the second portion of the cigarette 20 may also include an aerosol generating material. For example, an aerosol generating material made in the form of granules or capsules may be inserted into the second portion.

The entire first portion may be inserted into the aerosol generating device 10, and the second portion may be exposed to the outside. Alternatively, only a portion of the first portion may be inserted into the aerosol generating device 10, or the entire first portion and a portion of the second portion may be inserted into the aerosol generating device 10. The user may puff aerosol while holding the second portion by the mouth of the user. In this case, the aerosol is generated by the external air passing through the first portion, and the generated aerosol passes through the second portion and is delivered to the user's mouth.

For example, the external air may flow into at least one air passage formed in the aerosol generating device 10. For example, opening and closing of the air passage and/or a size of the air passage formed in the aerosol generating device 10 may be adjusted by the user. Accordingly, the amount and the quality of smoking may be adjusted by the user. As another example, the external air may flow into the cigarette 20 through at least one hole formed in a surface of the cigarette 20.

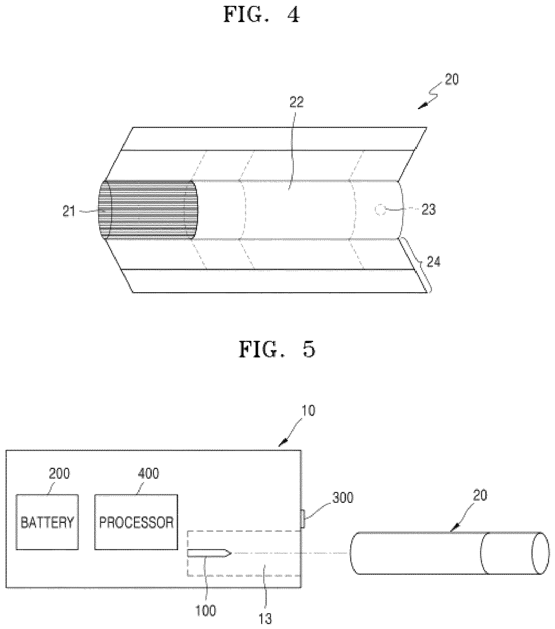

Hereinafter, an embodiment is described in detail with reference to FIG. 4.

FIG. 4 is a diagram illustrating an example of a cigarette.

Referring to FIG. 4, the cigarette 20 may include a tobacco rod 21 and a filter rod 22. The first portion described above with reference to FIGS. 1 through 3 may include the tobacco rod 21, and the second portion may include the filter rod 22.

FIG. 4 illustrates that the filter rod 22 includes a single segment, but is not limited thereto. In other words, the filter rod 22 may include a plurality of segments. For example, the filter rod 22 may include a first segment configured to cool an aerosol and a second segment configured to filter a certain component included in the aerosol. Also, as necessary, the filter rod 22 may further include at least one segment configured to perform other functions.

The cigarette 20 may be packaged by at least one wrapper 24. The wrapper 24 may have at least one hole through which external air may be introduced or internal air may be discharged. For example, the cigarette 20 may be packaged via one wrapper 24. As another example, the cigarette 20 may be doubly packaged by two or more wrappers 24. For example, the tobacco rod 21 may be packaged via a first wrapper, and the filter rod 22 may be packaged via a second wrapper. And, the tobacco rod 21 and the filter rod 22 wrapped by an individual wrapper are coupled to each other, and the entire cigarette 20 may be rewrapped by a third wrapper. When each of the tobacco rod 21 and the filter rod 22 includes a plurality of segments, each segment may be packaged via a separate wrapper. In addition, the entire cigarette 20 in which segments wrapped by individual wrappers are combined may be rewrapped by another wrapper.

The tobacco rod 21 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 21 may include other additives, such as flavors, a wetting agent, and/or organic acid. Also, the tobacco rod 21 may include a flavored liquid, such as menthol or a moisturizer, which is injected to the tobacco rod 21.

The tobacco rod 21 may be manufactured in various forms. For example, the tobacco rod 21 may be formed as a sheet or a strand. Also, the tobacco rod 21 may be formed as a pipe tobacco, which is formed of tiny bits cut from a tobacco sheet. Also, the tobacco rod 21 may be surrounded by a heat conductive material. For example, the heat-conducting material may be, but is not limited to, a metal foil such as aluminum foil. For example, the heat conductive material surrounding the tobacco rod 21 may uniformly distribute heat transmitted to the tobacco rod 21, and thus, the heat conductivity applied to the tobacco rod may be increased and taste of the tobacco may be improved. Also, the heat conductive material surrounding the tobacco rod 21 may function as a susceptor heated by the induction heater. Here, although not illustrated in the drawings, the tobacco rod 21 may further include an additional susceptor, in addition to the heat conductive material surrounding the tobacco rod 21.

The filter rod 22 may include a cellulose acetate filter. Shapes of the filter rod 22 are not limited. For example, the filter rod 22 may include a cylinder-type rod or a tube-type rod having a hollow inside. Also, the filter rod 22 may include a recess-type rod. When the filter rod 22 includes a plurality of segments, at least one of the plurality of segments may have a different shape.

The filter rod 22 may be formed to generate flavors. For example, a flavoring liquid may be injected onto the filter rod 22, or an additional fiber coated with a flavoring liquid may be inserted into the filter rod 22.

Also, the filter rod 22 may include at least one capsule 23. Here, the capsule 23 may perform a function of generating flavor or a function of generating aerosol. For example, the capsule 23 may have a configuration in which a liquid containing a flavoring material is wrapped with a film. For example, the capsule 23 may have a spherical or cylindrical shape, but is not limited thereto.

When the filter rod 22 includes a segment configured to cool the aerosol, the cooling segment may include a polymer material or a biodegradable polymer material. For example, the cooling segment may include pure polylactic acid alone, but the material for forming the cooling segment is not limited thereto. In some embodiments, the cooling segment may include a cellulose acetate filter having a plurality of holes. However, the cooling segment is not limited to the above-described example and is not limited as long as the cooling segment cools the aerosol.

Although not illustrated in FIG. 4, the cigarette 20 according to an embodiment may further include a front-end filter. The front-filter may be located on one side of the tobacco rod 21 which is opposite to the filter rod 22. The front-filter may prevent the tobacco rod 21 from being detached outwards and prevent the liquefied aerosol from flowing from the tobacco rod 21 into the aerosol generating device (10 of FIGS. 1 through 3), during smoking.

In the following embodiments, the term "mainstream smoke" may refer to an air flow from an upstream to a downstream of the aerosol generating article. The term "upstream" may refer to the tobacco rod side, and the term "downstream" may refer to the filter segment side. When the user uses the aerosol generating article, the user may hold the end of the aerosol generating article in the downstream side with one's mouth.

FIG. 5 is a diagram illustrating hardware configurations of the aerosol generating device according to an embodiment.

Referring to FIG. 5, the aerosol generating device 10 according to an embodiment may include a heater 100, a battery 200, a temperature sensor 300, and a processor 400. Because the heater 100, battery 200, and processor 400 illustrated in FIG. 5 correspond to the heater 100a and 100b, battery 200, and processor 400 described with respect to FIGS. 1 to 3, descriptions previously given will be omitted hereinafter. In addition, the components of the aerosol generating device 10 according to an embodiment are not limited to the components illustrated in FIG. 5. It will be understood by one of ordinary skill in the art that some of the hardware components illustrated in FIG. 5 may be omitted or a new component may be added.

The aerosol generating device 10 according to an embodiment may include an accommodation space 13 into which an aerosol generating article 20 may be inserted. The aerosol generating article 20 shown in FIG. 5 may correspond to the cigarette 20 shown in FIGS. 1 to 4. The heater 100 may generate aerosols by heating the aerosol generating article 20 accommodated in the accommodation space 13. In FIG. 5, the heater 100 is shown to be protruded in the accommodation space 13 and inserted into the aerosol generating article 20, but embodiments are not limited to the illustrated shape.

The temperature sensor 300 may measure the temperature of the aerosol generating article 20. In particular, when the aerosol generating article 20 is accommodated in the accommodation space 13, the temperature sensor 300 may measure the temperature of the outer surface of the aerosol generating article 20.

The temperature sensor 300 may be apart from the heater 100 so as not to be directly affected by the temperature of the heater 100, thereby being able to accurately measure the temperature of the outer surface of the aerosol generating article 20. For example, the heater 100 may be arranged in the accommodation space 13, and the temperature sensor 300 may be arranged outside the accommodation space 13. Thus, when the aerosol generating article 20 is accommodated in the accommodation space 13, the heater 100 may be arranged in the upstream side of the aerosol generating article 20 and the temperature sensor 300 may be arranged in the downstream side of the aerosol generating article 20.

The processor 400 may control the power supplied to the heater 100 from the battery 200 according to a preset temperature profile including a preheating period and a heating period.

The aerosol generating device 10 may start operating by receiving a user input. For example, the aerosol generating device 10 may start operating when the user presses a button for manipulating the operation of the aerosol generating device 10, and when it is detected that the aerosol generating article 20 is inserted into the accommodation space 13 of the aerosol generating device 10, the aerosol generating device 10 may start operating. When the aerosol generating device 10 starts operating, the processor 400 may control the power supplied to the heater 100 from the battery 200 according to the preset temperature profile including the preheating period and the heating period.

When the aerosol generating device 10 starts operating, the processor 400 may control the power supplied to the heater 100 from the battery 200 so that the heater 100 may be pre-heated. "Pre-heating" refers to a process in which the temperature of the heater 100 starts increasing from a state where the heater 100 is not supplied with power from the battery 200 and continues to increase until a temperature at which the aerosols may be generated from the aerosol generating article 20 is reached. When the heater 100 is pre-heated, the temperature of the heater 100 may be increased gradually.

While the heater 100 is pre-heated, a small amount of aerosols may be generated, but the amount of the aerosols may not be enough for the user to inhale. For example, at a time point when the pre-heating of the heater 100 is completed, the aerosol generating material included in the aerosol generating article 20 may reach a temperature in which volatile components are emitted. The aerosol generating device 10 may be prepared for generating aerosols from the aerosol generating article 20 through pre-heating.

The "preheating period" refers to time spent during the pre-heating of the heater 100. In particular, the preheating period may refer to a time from the beginning of the pre-heating of the heater 100 to the completion of the pre-heating of the heater 100. For example, the preheating period may refer to a time from the beginning of the pre-heating of the heater 100 to when the preset time has elapsed. For example, the preheating period may be 30 seconds from when the heater 100 started pre-heating. In another example, the preheating period may refer to a period during which the temperature of the heater 100 starts increasing from the beginning of the pre-heating of the heater 100 until a certain temperature is reached. A certain temperature may be greater than a temperature at which the aerosols start to be generated from the aerosol generating article 20. For example, the preheating period may refer to a period from the beginning of the pre-heating of the heater 100 until the temperature of the heater 100 reaches 300 °C.

After the preheating period ends, the processor 400 may control the power supplied to the heater 100 from the battery 200 so that the heater 100 is heated to a substantial operation temperature. The "substantial operation temperature" refers to a variable operation temperature at which the heater 100 may heat the aerosol generating article 20 to generate aerosols. When the heater 100 is heated to the substantial operation temperature, the user may be provided with sufficient amount of aerosol by inhaling through the aerosol generating article 20. As described above, the heating period is defined as a period during which the processor 400 operates the heater 100 at a substantial operation temperature.

In addition, the processor 400 may detect whether the amount of moisture in the aerosol generating article 20 is included in a preset range based on the temperature of the aerosol generating article 20 in the heating period. The amount of moisture in the aerosol generating article 20 may refer to the amount of water (HH₂O) contained in the tobacco rod. The amount of moisture within a preset range refers to the amount of moisture that needs to be included in the aerosol generating article 20 for generating aerosols that have excellent taste, sufficient feeling of smoke, and a temperature appropriate for the user to inhale.

When an aerosol generating article 20 containing more moisture than the preset range is inserted into the aerosol generating device 10 and heated, moisture in the aerosol generating article 20 may evaporate by the heater 100 and excess water vapor may be generated. The aerosols provided to the user may be excessively high due to a mixture of vapor and aerosols.

In addition, the an aerosol generating article 20 containing less moisture than the preset range is inserted into the aerosol generating device 10 and heated, moisture may not be enough and thus aerosols may not be sufficiently generated.

The processor 400 may control the amount of moisture in the aerosol generating article 20 at a time point when the preheating period ends by controlling the duration of the preheating period according to whether the amount of moisture in the aerosol generating article 20 is included in the preset range. In other words, when the amount of moisture in the aerosol generating article 20 is not included in the preset range, the processor 400 may control the amount of moisture in the aerosol generating article 20 to the preset range at the time point when the preheating period ends by controlling the duration of the preheating period. For example, the processor 400 may change the temperature profile to extend the duration of the preheating period so that the moisture in the aerosol generating article 20 evaporates. Details of the above process are described below.

In addition, the aerosol generating device 10 according to an embodiment may detect whether the aerosol generating article 20 is available for use based on the temperature of the aerosol generating article 20 at the time point when the preheating period ends. For example, when the aerosol generating article 20 has been completely used and needs to be disposed or is unsuitable for use due to containing too much or too little moisture, the aerosol generating article 20 may not be available for use. The aerosol generating device 10 according to an embodiment may detect that the aerosol generating article 20 is not available for use when the temperature of the of the aerosol generating article 20 at the time point when the preheating period ends is too high or too low. In this case, the aerosol generating device 10 may output an alarm notifying that the aerosol generating article 20 is not available for use.

Hereinafter, referring to the experiment, a method performed by the aerosol generating device 10 according to the present disclosure, of detecting whether the amount of moisture in the aerosol generating article 20 is included in the preset range, is described below. The following experiment is to help understand the aerosol generating device 10 according to the present disclosure and a method of controlling the same, and the scope is not limited to the contents of the experiment.

Experiment: Experiment of measuring temperature according to amount of moisture in aerosol generating article 20

An experiment of measuring the temperatures of the mainstream smoke and the aerosol generating article 20 according to the amount of moisture included in the tobacco rod (e.g., 21 of FIG. 4) of the aerosol generating article 20 was conducted. The temperatures of the mainstream smoke and the aerosol generating article 20 are temperatures at a time point when the preheating period ends, and the amount of moisture included in the aerosol generating article 20 refers to the weight of moisture relative to the total weight of the tobacco rod. The temperature of the outer surface of the aerosol generating article 20 was measured.

**a. Table 1**

| Amount of moisture (wt%) | Temperature of mainstream smoke (°C) | Outer surface temperature of aerosol generating article (°C) |
|---|---|---|
| 11 | 63.5 | 51.6 |
| 12.9 | 64.44 | 49.6 |
| 13.1 | 67.14 | 55.3 |
| 16 | 68.3 | 59.7 |
| 19 | 72.04 | 60.06 |
| 24 | 74.02 | 62.18 |
| 29 | 80.05 | 67.28 |

Results of the experiment are shown in Table 1. As described in Table 1, it was confirmed that the temperatures of the mainstream smoke and the aerosol generating article 20 increase as the amount of moisture in the aerosol generating article 20 increases.

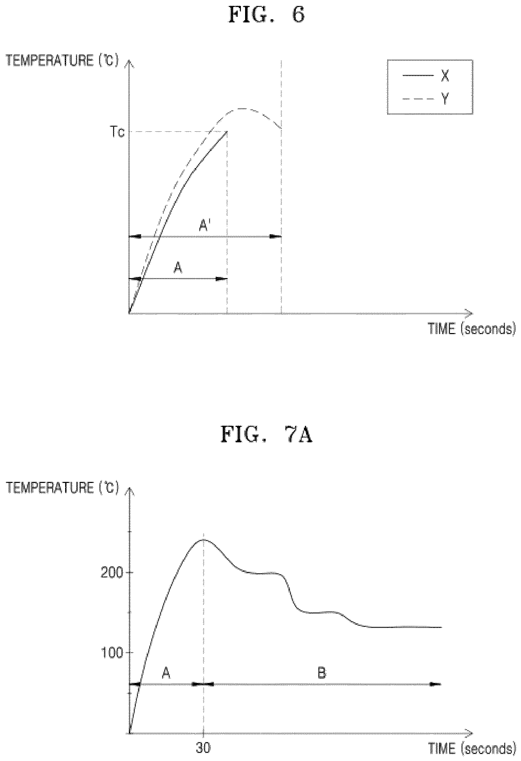

Referring to the experiment result and FIG. 6, a method for determining whether the amount of moisture included in the aerosol generating article 20 is in the preset range by the processor 400 will be described below.

FIG. 6 is a graph illustrating the temperature of the aerosol generating article 20 according to the amount of moisture in the aerosol generating article 20.

The horizontal axis of the graph shown in FIG. 6 refers to the time (sec) elapsed after the heater 100 had started pre-heating, and the vertical axis refers to the temperature (°C) of the aerosol generating article 20 measured by the temperature sensor 300. Graph X of FIG. 6 shows a change in the temperature of the aerosol generating article 20 according to the time during the preheating period A when the aerosol generating article 20 is in a regular state in which the amount of moisture in the aerosol generating article 20 is included in the preset range. In addition, Graph Y shows a change in the temperature of the aerosol generating article 20 according to the time during the preheating period A when the aerosol generating article 20 is over-humidified, that is, the amount of moisture in the aerosol generating article 20 is greater than the preset range. The temperature of the aerosol generating article 20 at the heating period in the graph of FIG. 6 is omitted.

Referring to graph X of FIG. 6, in case of the aerosol generating article 20 in a regular state, the temperature of the outer surface of the aerosol generating article 20 increases when the heater 100 is pre-heated. The temperature of the aerosol generating article 20 in a regular state may rise to be less than or equal to the threshold temperature T_{c} during the preheating period A.

Referring to graph Y of FIG. 6, in case of an over-humidified aerosol generating article 20, the temperature of the outer surface of the aerosol generating article 20 increases when the heater 100 is pre-heated. The over-humidified aerosol generating article 20 may contain more moisture than that of the aerosol generating article 20 in a regular state. Thus, the amount of vapor generated in the over-humidified aerosol generating article 20 may be greater than the amount of vapor generated in the aerosol generating article 20 in a regular state. As high-temperature vapor is generated in an excessive amount, the temperature of the over-humidified aerosol generating article 20 may be greater than the temperature of the aerosol generating article 20 in a regular state.

As time elapses after pre-heating begins, a temperature difference between those of the aerosol generating article 20 containing more moisture than the preset range and the aerosol generating article 20 containing moisture of which the amount is included in the preset range may increase. According to the preset temperature profile, whether the amount of moisture in the aerosol generating article 20 is in the preset range may be detected from the temperature of the aerosol generating article 20 at a time point t when or immediately before the preheating period ends.

For example, according to the preset temperature profile, when the time point when the preheating period ends is 30 seconds after the beginning of the heating, the processor 400 may compare the temperature of the aerosol generating article 20 at a time point when about 25 seconds to about 30 seconds has elapsed from when the heater 100 started heating with the threshold temperature T_{c}. If the temperature of the aerosol generating article 20 exceeds the threshold temperature T_{c}, the amount of moisture in the aerosol generating article 20 may be detected to be greater than the preset range. The temperature of the aerosol generating article 20 may be measured by the temperature sensor 300, and may be the temperature of the outer surface of the aerosol generating article 20.

As an example, when the tobacco rod contains moisture of about 8 wt% to about 15 wt% of the total weight of the tobacco rod, the aerosol generating article 20 may be seen as being in a regular state in which the amount of moisture in the aerosol generating article 20 is included in the preset range.

Thus, when the tobacco rod of the aerosol generating article 20 contains moisture exceeding 15 wt% of the total weight of the tobacco rod, the aerosol generating article 20 may be seen as over-humidified. In addition, when tobacco rod contains moisture that is less than about 8 wt% of the total weight of the tobacco rod, the aerosol generating article 20 may be seen as being in a dry state.

Referring to the experimental results of Table 1, when the amount of moisture in the aerosol generating article 20 was 13.1 wt%, the temperature of the outer surface of the aerosol generating article 20 was 55.3 °C. In addition, when the amount of moisture in the aerosol generating device 20 was 16 wt%, the temperature of the outer surface of the aerosol generating device 20 was 59.7 °C. When the tobacco rod of the aerosol generating article 20 contains moisture exceeding 15 wt% of the total weight of the tobacco rod, the aerosol generating article 20 may be seen as over-humidified. Thus, the threshold temperature T_{c} may be set to about 58 °C to about 60 °C. In this case, according to the preset temperature profile, when the temperature of the aerosol generating article 20 is about 58 °C to about 60 °C at a time point when or immediately before the preheating period ends, the processor 400 may detect that the aerosol generating article 20 is over-humidified, that is, the amount of moisture in the aerosol generating article 20 is greater than the preset range.

When the processor 400 detects that the aerosol generating article 20 is over-humidified, the processor 400 may extend the duration of the preheating period to thereby change the preset temperature profile.

Referring to the graph X of FIG. 6 which illustrates the temperature of the aerosol generating article 20 in a regular state in the preheating period, the preheating period A may end at a scheduled end time t, according to the preset temperature profile. Referring to graph Y of FIG. 6 showing the temperature of the over-humidified aerosol generating article 20 in the preheating period, the preheating period A' may end at a time period that is extended t' more than the scheduled end time t.

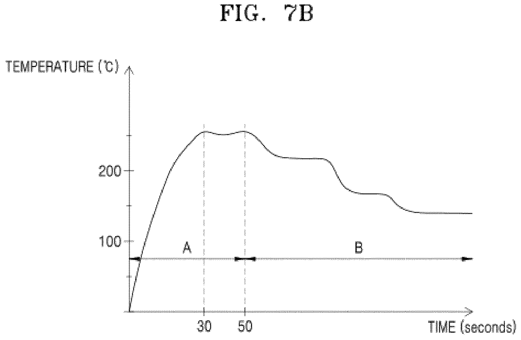

FIGS. 7A and 7B are graphs illustrating temperature profiles of an aerosol generating device according to an embodiment.

FIG. 7A is a preset temperature profile of the aerosol generating device 10, and is a temperature profile regarding the aerosol generating article 20 in a regular state, and FIG. 7B is a changed temperature profile of the aerosol generating device 10, and is a temperature profile regarding the over-humidified aerosol generating apparatus 10.

Referring to FIG. 7A, in the case of the aerosol generating article 20 in a regular state, the temperature of the heater 100 may increase during the preheating period A. The temperature of the heater 100 during the preheating period A may gradually rise. After the preheating period A ends, the heating period B may begin. The temperature of the heater 100 during the heating period B may be heated to a substantial operation temperature for generating aerosol from the aerosol generating article 20 according to the preset temperature profile.

For example, when the duration of the preheating period in the preset temperature profile is 30 seconds after the heater 100 begins heating, the preheating period A may end and the heating period B may start when 30 seconds from the beginning of the heating of the heater 100 elapses.

As described above, when, according to the preset temperature profile, the temperature of the aerosol generating article 20 in the aerosol generating device 10 exceeds the threshold temperature at a time point when or immediately before the preheating period ends, the temperature profile may be changed. In other words, when the aerosol generating device 10 detects that the aerosol generating article 20 is over-humidified, the temperature profile may be changed to the temperature profile shown in FIG. 7B.

Referring to FIG. 7B, when the aerosol generating article 20 is over-humidified, the duration of the preheating period A' may increase. When the aerosol generating article 20 is over-humidified, the processor 400 may, by extending the preheating period A', adjust the amount of moisture in the aerosol generating article 20 at the time point when the preheating period A' ends to be similar to the that of the aerosol generating article 20 in a regular state.

For example, when the temperature of the aerosol generating article 20 exceeds the threshold temperature at a time point after 25 seconds to 30 seconds from the beginning of the heating of the heater 100, the processor 400 may change the preset temperature profile and extend the duration of the preheating period A' by 20 seconds. The over-humidified aerosol generating article 20 may change to the aerosol generating article 20 in a regular state as the aerosol generating article 20 is heated for 20 seconds and moisture is further evaporated. After 50 seconds after the heater 100 starts heating, the preheating period A' may end and the heating period B' may start. Thus, the preheating period A' of the over-humidified aerosol generating article 20 may be changed from 30 seconds after the beginning of the heating of the heater 100 to 50 seconds after the beginning of the heating of the heater 100.

In the case of the over-humidified aerosol generating article 20, when the preheating period A' is extended, the amount of moisture in the aerosol generating article 20 may be adjusted. When the processor 400 detects the over-humidified aerosol generating article 20, the processor 400 may extend the preheating period A', and thus may further evaporate the moisture in the aerosol generating article 20 during the extended time. As a result, the amount of moisture in the aerosol generating article 20 may be included in the preset range at a time point when the preheating period A' ends. When the preheating period A' ends and the heating period B' starts, the user may be provided with aerosol generated from the aerosol generating article 20 containing the amount of moisture in the preset range.

In addition, the processor 400 may control the duration of the preheating period based on a difference between the temperature of the aerosol generating article 20 at a time point when or immediately before the preheating period ends and the threshold temperature, according to the preset temperature profile. The higher the amount of moisture in the aerosol generating article 20, the greater the difference between the temperature of the aerosol generating article 20 and the threshold temperature. Therefore, the duration of the preheating period may be controlled according to the difference in temperature, thereby preventing unnecessary power consumption.

For example, when the threshold temperature is 60 °C, the duration of the preheating period may be extended by 10 seconds when the difference between the temperature of the aerosol generating article 20 at a time point when or immediately before the preheating period ends and the threshold temperature is less than 5 °C, and the duration of the preheating period may be extended by 20 seconds when the difference is 5 °C or more.

The temperature of the heater 100 is shown to gradually reduce in the heating period B of FIG. 7A and the heating period B' of FIG. 7B. However, such illustrations are only examples of the temperature profile. The temperature profile of the heater 100 may gradually decrease and increase again in the heating period B and B', or may be a temperature profile that is not shown or described.

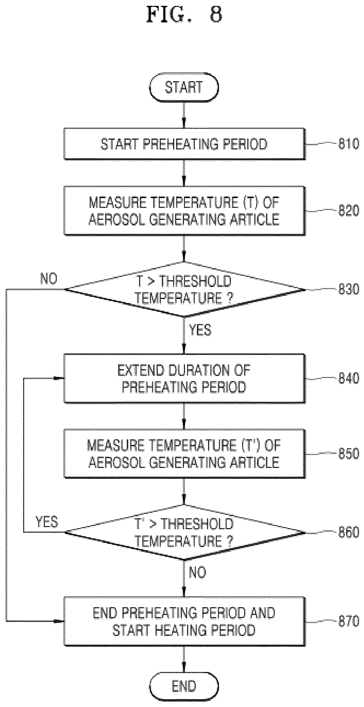

FIG. 8 is a flowchart illustrating a method, performed by the aerosol generating device shown in FIG. 5, of detecting the amount of moisture in the aerosol generating article and adjusting the amount of moisture.

In operation 810, the aerosol generating device 10 may start operating by the user input. The aerosol generating device 10 may start the preheating period of the heater 100 according to the preset temperature profile.

In operation 820, the aerosol generating device 10 may measure the temperature of the aerosol generating article 20. In this case, the temperature sensor 300 may be arranged on the outside of the accommodation space 13 to measure the temperature of the outer surface of the aerosol generating article 20.

In operation 830, the aerosol generating device 10 may compare the temperature of the aerosol generating article 20 and the threshold temperature to detect whether the amount of moisture in the aerosol generating article 20 is in the preset range. The time point of comparing the temperatures may be a time point when or immediately before the preheating period ends, according to the preset temperature profile. The threshold temperature may be set in advance and may be set to an appropriate value depending on the type of the aerosol generating article 20 and the operating environment of the aerosol generating device 10. For example, the threshold temperature may be about 58 °C to about 60 °C.

In operation 830, when the temperature of the aerosol generating article 20 is equal to or less than the threshold temperature, the aerosol generating device 10 may perform operation 870. In operation 870, the aerosol generating device 10 may end the preheating period and start the heating period.

In operation 830, when the temperature of the aerosol generating article 20 exceeds the threshold temperature, the aerosol generating device 10 may perform operation 840. In operation 840, the aerosol generating device 10 may change the preset temperature profile by extending the duration of the preheating period. In other words, when the temperature of the aerosol generating article 20 exceeds the threshold temperature, the aerosol generating device 10 may detect that the aerosol generating article 20 is over-humidified, and may extend the duration of the preheating period to further evaporate moisture inside the aerosol generating article 20.

In operation 850, when the preheating period is extended according to the changed temperature profile, the aerosol generating device 10 may measure the temperature of the aerosol generating article 20 during the preheating section.

In operation 860, as in operation 830, the aerosol generating device 10 may compare the temperature of the aerosol generating article 20 with the threshold temperature to detect whether the amount of moisture in the aerosol generating article 20 is in the preset range. In other words, in operation 840, the aerosol generating device 10 may compare the temperature of the aerosol generating article 20 at a time point when or immediately before the extended preheating period ends with the threshold temperature to detect whether moisture in the aerosol generating article 20 is decreased to the preset range.

In operation 860, when the temperature of the aerosol generating article 20 exceeds the threshold temperature, the aerosol generating device 10 may perform operation 840 again. In other words, the aerosol generating device 10 may detect that the aerosol generating article 20 is still over-humidified, and may perform feedback control to extend the duration of the preheating period again.

In operation 860, when the temperature of the aerosol generating article 20 is equal to or less than the threshold temperature, the aerosol generating device 10 may perform operation 870. In operation 870, the aerosol generating device 10 may end the preheating period and start the heating period.

As described above, the aerosol generating device 10 according to an embodiment may adjust the amount of moisture in the aerosol generating article 20 at a time point when the preheating period ends by giving feedback regarding the temperature of the aerosol generating article 20 to the aerosol generating article. Therefore, the aerosol generating device 10 according to an embodiment may improve the user's smoking satisfaction.

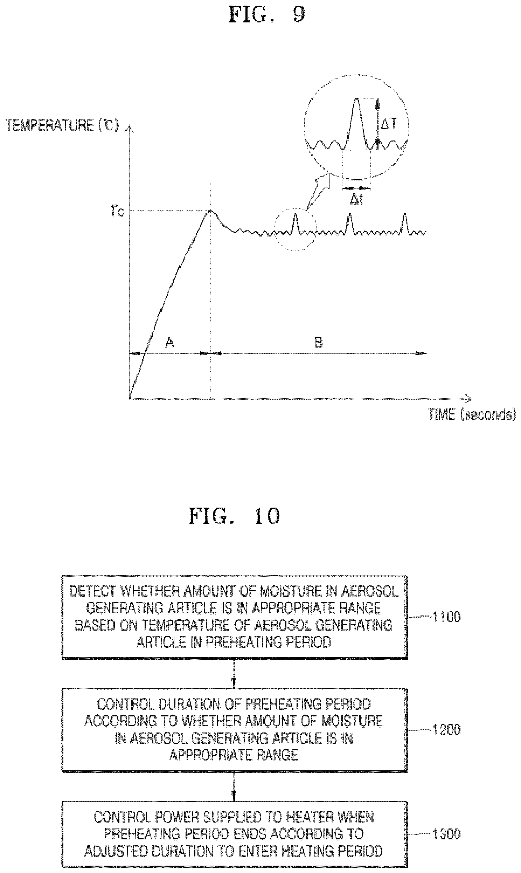

FIG. 9 is a graph showing a change in temperature of the aerosol generating article when the aerosol generating article is heated.

The horizontal axis of the graph shown in FIG. 9 refers to the time (second) elapsed after the heater 100 had started pre-heating, and the vertical axis refers to the temperature (°C) of the aerosol generating article 20 in a regular state measured by the temperature sensor 300.

Referring to FIG. 9, the temperature of the aerosol generating article 20 during the preheating period A may increase to be equal to or less than the threshold temperature T_{c}. The user may be provided with aerosol during the heating period B. The aerosol generating device 10 may send an alarm to the user at the time when the heating period B starts to inform that the aerosol generating article 20 is available for use.

During the heating period B, the processor 400 may detect the user's puff based on the temperature change ΔT of the aerosol generating article 20 in the preset time period Δt. The preset time period Δt may be a time period to measure the temperature change of the aerosol generating article 20 caused by the user's puff. For example, the preset time period Δt may generally be about 1 second to about 3 seconds, which is a time spent for the user to perform a single puff.

When the aerosol generating article 20 is heated by the heater 100 during the heating period B, the temperature of the aerosol generating article 20 may be maintained within a certain range when no puff has occurred by the user. When the user's puff occurs, the mainstream smoke may flow from the upstream to the downstream side of the aerosol generating article 20. Referring to [Table 1], because the temperature of the mainstream smoke is 10 °C or higher than the temperature of the outer surface of the aerosol generating article 20, the temperature of the aerosol generating article 20 may rapidly rise when the mainstream smoke flows during the preset time period Δt. When the mainstream smoke is discharged through the aerosol generating article 20, the temperature of the aerosol generating article 20 may decrease.

Thus, the processor 400 may detect that the user's puff has been generated when the temperature change ΔT of the aerosol generating article 20 in the preset time period Δt during the heating period B is equal to or greater than the threshold temperature. For example, the processor 400 may detect the user's puff when the temperature change ΔT of the aerosol generating article 20 in the preset time period Δt is maintained within a range of about 1 °C to about 2 °C and then rapidly changes to be within a range of about 3 °C to about 5 °C.

As described above, the aerosol generating device 10 according to an embodiment may not be provided with a separate puff sensor for detecting the user's puff and may detect the user's puff through the temperature sensor 300. Therefore, because a puff sensor does not need to be arranged in a passage through which the airflow flows, the internal structure of the aerosol generating device 10 may become simpler and designing the aerosol generating device 10 may be simple.

In addition, the aerosol generating device 10 may cumulatively count the number of times the user's puff is detected. The aerosol generating device 10 may send an alarm regarding the end of usage of the aerosol generating article 20 to the user when the accumulated number of times of the puff is the same as the preset number of times. For example, when the aerosol generating article 20 of which the use is scheduled to end in 12 puffs is being used, the aerosol generating device 10 may send an alarm when the user's puff is detected 10 times. By checking the alarm, the user may recognize that there are 1 to 2 puffs left until the end of usage. The alarm may be a tactile alarm using a vibration member, an audible alarm using a speaker, or a visual alarm using a display.

In addition, the aerosol generating device 10 according to an embodiment may detect whether the aerosol generating article 20 is accommodated in the accommodation space 13.

The temperature sensor 300 may measure the temperature of the atmosphere around the aerosol generating device 10 when the aerosol generating article 20 is not accommodated in the accommodation space 13. When the aerosol generating article 20 is accommodated in the accommodation space 13, because the temperature sensor 300 measures the temperature of the aerosol generating article 20, a difference in temperature may occur. In other words, the processor 400 may detect that the aerosol generating article 20 is inserted into the accommodation space 13 based on a difference in measured values measured by the temperature sensor 300 due to a change from the temperature of the atmosphere to the temperature of the aerosol-generating article 20.

Because the aerosol generating device 10 according to an embodiment may detect by the temperature sensor 300 whether the aerosol generating article 20 is inserted into the accommodation space 13, a separate sensor is not needed. Thus, the internal structure of the aerosol generating device 10 may become simpler and manufacturing thereof may be easy.

If the processor 400 detects that the aerosol generating article 20 is accommodated in the accommodation space 13, the processor 400 may control the power supplied to the heater 100 from the battery 200 so that the preheating of the heater 100 starts according to the preset temperature profile. When the user inserts the aerosol generating device 20 into the accommodation space 13, the preheating of the heater 100 automatically starts even without a separate operation for starting the preheating of the heater 100. Therefore, the user may conveniently use the aerosol generating device 10.

FIG. 10 is a flowchart of a method of controlling the aerosol generating device shown in FIG. 5.

Because the method of controlling the aerosol generating device 10 relates to the embodiment described with reference to FIGS. 5 to 9, the descriptions of FIGS. 5 to 9 may apply to the control method of the aerosol generating device 10, even if the descriptions are omitted below.

Referring to FIG. 10, in operation 1100, the aerosol generating device 10 may detect whether the amount of moisture in the aerosol generating article 20 is included in the preset range based on the temperature of the aerosol generating article 20 in the preheating period. The aerosol generating device 10 may compare the temperature of the aerosol generating article 20 at the time point when or immediately before the preheating period ends with the threshold temperature. If the temperature of the aerosol generating article 20 exceeds the threshold temperature, the amount of moisture in the aerosol generating article 20 of the aerosol generating device 10 may be detected to be greater than the preset range.

In operation 1200, the aerosol generating device 10 may adjust the duration of the preheating period according to whether the amount of moisture in the aerosol generating article 20 is included in the preset range. When the amount of moisture in the aerosol generating article 20 is included in the preset range, the aerosol generating device 10 may perform the preheating according to the preset temperature profile. On the other hand, when the amount of moisture in the aerosol generating article 20 is greater than the preset range, the aerosol generating device 10 may change the preset temperature profile by extending the duration of the preheating period. The aerosol generating article 20 may further evaporate moisture during the extended preheating period.

In operation 1300, when the preheating period ends according to the adjusted duration, the aerosol generating device 10 may control the power supplied to the heater 100 to enter the heating period. When the heating period starts, the user may receive aerosol from the aerosol generating article 20.

One embodiment may also be implemented in the form of a computer-readable recording medium including instructions executable by a computer, such as a program module executable by the computer. The computer-readable recording medium may be any available medium that can be accessed by a computer and includes both volatile and nonvolatile media, and removable and non-removable media. In addition, the computer-readable recording medium may include both a computer storage medium and a communication medium. The computer storage medium includes all of volatile and nonvolatile, and removable and non-removable media implemented by any method or technology for storage of information such as computer-readable instructions, data structures, program modules or other data. The communication medium typically includes computer-readable instructions, data structures, other data in modulated data signals such as program modules, or other transmission mechanisms, and includes any information transfer media.

Those of ordinary skill in the art related to the present embodiments may understand that various changes in form and details can be made therein without departing from the scope of the characteristics described above. Therefore, the disclosed methods should be considered in a descriptive point of view, not a restrictive point of view. The scope of the present disclosure is defined by the appended claims rather than by the foregoing description, and all differences within the scope of equivalents thereof should be construed as being included in the present disclosure.

## Claims

1. An aerosol generating device comprising:
a heater configured to heat an aerosol generating article accommodated in an accommodation space of the aerosol generating device;
a battery configured to supply power to the heater;
a temperature sensor configured to measure a temperature of the aerosol generating article; and
a processor configured to control power supplied to the heater from the battery according to a preset temperature profile including a preheating period and a heating period, wherein
the processor is further configured to
detect whether an amount of moisture in the aerosol generating article is included in a preset range based on the temperature of the aerosol generating article in the preheating period, and
control a duration of the preheating period according to whether the amount of moisture in the aerosol generating article is included in the preset range.

2. The aerosol generating device of claim 1, wherein the processor is further configured to control the amount of moisture in the aerosol generating article at a time when the preheating period ends to be in the preset range.

3. The aerosol generating device of claim 1, wherein the processor is further configured to detect whether the amount of moisture in the aerosol generating article at a time when or immediately before the preheating period ends according to the preset temperature profile is included in the preset range.

4. The aerosol generating device of claim 1, wherein the processor is further configured to, when the amount of moisture in the aerosol generating article is greater than the preset range, change the preset temperature profile by not ending the preheating period and extending the preheating period.

5. The aerosol generating device of claim 1, wherein the processor is further configured to detect that the amount of moisture in the aerosol generating article is greater than the preset range when the temperature of the aerosol generating article exceeds a threshold temperature.

6. The aerosol generating device of claim 5, wherein the threshold temperature is about 58 °C to about 60 °C.

7. The aerosol generating device of claim 1, wherein the temperature sensor is spaced apart from the heater.

8. The aerosol generating device of claim 7, wherein the temperature sensor is arranged outside the accommodation space and is configured to measure a temperature of an outer surface of the aerosol generating article accommodated in the accommodation space.

9. The aerosol generating device of claim 1, wherein the processor is further configured to detect a user's puff based on a change in the temperature of the aerosol generating article with respect to a preset time period during the heating period.

10. The aerosol generating device of claim 1, wherein the processor is further configured to detect whether the aerosol generating article is accommodated in the accommodation space based on a difference value between a temperature of the accommodation space in which the aerosol generating article is not accommodated, the temperature of the accommodation space being measured by the temperature sensor, and the temperature of the aerosol generating article.

11. The aerosol generating apparatus of claim 10, wherein the processor is further configured to, when the aerosol generating article is detected to be accommodated in the accommodation space, control power supplied to the heater from the battery to start the preset temperature profile.

12. A method of controlling an aerosol generating device, the method comprising:
detecting whether an amount of moisture in an aerosol generating article is in a preset range based on a temperature of the aerosol generating article in a preheating period;
adjusting a duration of the preheating period according to whether the amount of moisture in the aerosol generating article is included in the preset range; and
when the preheating period ends according to the adjusted duration, controlling power supplied to a heater to enter a heating period.

13. The method of claim 12, wherein, in the detecting of whether the amount of moisture in the aerosol generating article is in the preset range, when the temperature of the aerosol generating article exceeds a threshold temperature at a time point when or immediately before the preheating period ends, the amount of moisture in the aerosol generating article is detected to be greater than the preset range.

14. The method claim 12, wherein, in the adjusting of the duration of the preheating period, when the amount of moisture in the aerosol generating article is greater than the preset range, the preheating period is not ended and is extended.
